(19) Europäisches Patentamt
European Patent Office
Office européen des brevets

(11) EP 3 878 886 A1

(12) EUROPEAN PATENT APPLICATION

(43) Date of publication:
15.09.2021 Bulletin 2021/37

(21) Application number: 21155743.4

(22) Date of filing: 23.02.2018

(51) Int Cl.:
*C08G 63/181* (2006.01) *C08G 63/672* (2006.01)
*C08G 63/83* (2006.01) *C08G 63/84* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2017 US 201762462948 P**

(62) Document number(s) of the earlier application(s) in accordance with Art. 76 EPC:
**18708880.2 / 3 585 827**

(71) Applicant: **DuPont Industrial Biosciences USA, LLC**
**Wilmington, Delaware 19805 (US)**

(72) Inventors:
- **SUNKARA, Hari Babu**
  **Hockessin, Delaware 19707 (US)**
- **POLADI, Raja Hari**
  **Bear, Delaware 19702 (US)**

(74) Representative: **Mewburn Ellis LLP**
**Aurora Building**
**Counterslip**
**Bristol BS1 6BX (GB)**

Remarks:
This application was filed on 08-02-2021 as a divisional application to the application mentioned under INID code 62.

# (54) PROCESS FOR PREPARING POLY(TRIMETHYLENE FURANDICARBOXYLATE) USING ZINC CATALYST

(57) A process is disclosed herein comprising the steps: a) contacting a mixture comprising furandicarboxylic acid dialkyl ester, 1,3-propanediol, a zinc compound, and optionally a poly(alkylene ether) diol, at a temperature in the range of from about 120°C to about 220°C to form prepolymer, wherein the mole ratio of the furandicarboxylic acid dialkyl ester to the 1,3-propanediol is in the range of from 1:1.3 to 1:2.2; and b) heating the prepolymer under reduced pressure to a temperature in the range of from about 220°C to about 260°C to form polymer. The mixture of step a) can further comprise an anthraquinone compound.

EP 3 878 886 A1

## Description

### CROSS-REFERENCE TO RELATED APPLICATIONS

The present application claims priority to U.S. Provisional Patent Application Serial No. 62/462,948, filed February 24, 2017, which is hereby incorporated by reference in its entirety.

### FIELD OF THE DISCLOSURE

The disclosure herein relates processes for making poly(trimethylene furandicarboxylate) using zinc catalyst.

### BACKGROUND

Polyesters are an important class of industrially significant polymers. Polyesters find uses in many industries, including apparel, carpets, packaging films, paints, electronics, and transportation. Typically, polyesters are produced by the condensation of one or more diacids or esters thereof with one or more diols, wherein the starting materials are derived from petroleum.

Poly(trimethylene furandicarboxylate) (PTF) is an important new polymer, wherein the starting materials furan dicarboxylic acid or an ester thereof and 1,3-propanediol can be produced from biomass feedstock. The furan dicarboxylic acid (FDCA) can be produced from the oxidation of hydroxymethyl furfural (which is readily available from a number of sources, for example, biomass and/or high fructose corn syrup) and 1,3-propanediol can be produced by the fermentation of sugar. Both of these materials are renewable materials that are beginning to be produced in industrially significant amounts.

While PTF can be made from 100% renewable materials, the production of the polymer has presented significant challenges. For example, the titanium catalysts typically used in transesterification and polycondensation to produce PTF can also produce impurities which can impart an undesirable yellow color to the PTF.

Processes to prepare PTF having less color are needed.

### SUMMARY

Disclosed herein are processes to prepare poly(trimethylene furandicarboxylate) polymer, polymer produced by such processes, and a method of increasing polycondensation rate in a process to prepare poly(trimethylene furandicarboxylate polymer). Also disclosed are processes to prepare a block copolymer comprising poly(trimethylene furandicarboxylate) hard segment and poly(alkylene ether furandicarboxylate) soft segment, and copolymer produced by such processes. In one embodiment a process is disclosed, the process comprising the steps:

a) contacting a mixture comprising furandicarboxylic acid dialkyl ester, 1,3-propanediol, a zinc compound, and optionally a poly(alkylene ether) diol, at a temperature in the range of from about 120°C to about 220°C to form prepolymer,
wherein the mole ratio of the furandicarboxylic acid dialkyl ester to the 1,3-propanediol is in the range of from 1:1.3 to 1:2.2; and
b) heating the prepolymer under reduced pressure to a temperature in the range of from about 220°C to about 260°C to form polymer.

In one embodiment, the furandicarboxylic acid dialkyl ester is 2,5-furandicarboxylate dimethyl ester and the polymer is poly(trimethylene furandicarboxylate). In another embodiment, the mixture of step a) further comprises an anthraquinone compound represented by Structure A as disclosed herein below. In yet another embodiment, the zinc compound comprises zinc acetate, zinc acetylacetonate, zinc glycolate, zinc p-toluenesulfonate, zinc carbonate, zinc trifluoroacetate, zinc oxide, or zinc nitrate. In a further embodiment, the concentration of the zinc compound is in the range of from about 20 ppm to about 300 ppm, based on the total weight of the polymer. In an additional embodiment, the mixture in step a) further comprises a phosphorus compound, and the phosphorus compound is present in the mixture in an amount in the range of from about 1 ppm to about 50 ppm, based on the total weight of the polymer.

In one embodiment, step a) of the process is performed in the absence of a titanium compound. In another embodiment, step b) of the process is performed in the absence of a titanium compound. In a further embodiment, both step a) and step b) of the process are performed in the absence of a titanium compound.

In another embodiment, the process further comprises the step:
c) crystallizing the poly(trimethylene furandicarboxylate) polymer obtained from step b) at a temperature in the range of from about 110 °C to about 130 °C to obtain crystallized poly(trimethylene furandicarboxylate) polymer.

In yet another embodiment, the process further comprises the step:
d) polymerizing the crystallized poly(trimethylene furandicarboxylate) polymer in the solid state at a temperature below the melting point of the polymer.

In a further embodiment, the poly(alkylene ether)glycol is present in the mixture of step a) and the poly(alkylene ether glycol) is selected from the group consisting of poly(ethylene ether) glycol, poly(1,2-propylene ether) glycol, poly(trimethylene ether) glycol, poly(tetramethylene ether) glycol and poly(ethylene-co-tetramethylene ether) glycol, and the polymer is a block copolymer comprising poly(trimethylene furandicarboxylate) hard segment and poly(alkylene ether furandicarboxylate) soft segment.

## DETAILED DESCRIPTION

All patents, patent applications, and publications cited herein are incorporated herein by reference in their entirety.

As used herein, the term "embodiment" or "disclosure" is not meant to be limiting, but applies generally to any of the embodiments defined in the claims or described herein. These terms are used interchangeably herein.

In this disclosure, a number of terms and abbreviations are used. The following definitions apply unless specifically stated otherwise.

The articles "a", "an", and "the" preceding an element or component are intended to be nonrestrictive regarding the number of instances (i.e. occurrences) of the element or component. There "a", "an", and "the" should be read to include one or at least one, and the singular word form of the element or component also includes the plural unless the number is obviously meant to be singular.

The term "comprising" means the presence of the stated features, integers, steps, or components as referred to in the claims, but that it does not preclude the presence or addition of one or more other features, integers, steps, components, or groups thereof. The term "comprising" is intended to include embodiments encompassed by the terms "consisting essentially of" and "consisting of". Similarly, the term "consisting essentially of" is intended to include embodiments encompassed by the term "consisting of".

Where present, all ranges are inclusive and combinable. For example, when a range of "1 to 5" is recited, the recited range should be construed as including ranges "1 to 4", "1 to 3", 1-2", "1-2 and 4-5", "1-3 and 5", and the like.

As used herein in connection with a numerical value, the term "about" refers to a range of +/- 0.5 of the numerical value, unless the term is otherwise specifically defined in context. For instance, the phrase a "pH value of about 6" refers to pH values of from 5.5 to 6.5, unless the pH value is specifically defined otherwise.

It is intended that every maximum numerical limitation given throughout this Specification includes every lower numerical limitation, as if such lower numerical limitations were expressly written herein. Every minimum numerical limitation given throughout this Specification will include every higher numerical limitation, as if such higher numerical limitations were expressly written herein. Every numerical range given throughout this Specification will include every narrower numerical range that falls within such broader numerical range, as if such narrower numerical ranges were all expressly written herein.

The features and advantages of the present disclosure will be more readily understood, by those of ordinary skill in the art from reading the following detailed description. It is to be appreciated that certain features of the disclosure, which are, for clarity, described above and below in the context of separate embodiments, may also be provided in combination in a single element. Conversely, various features of the disclosure that are, for brevity, described in the context of a single embodiment, may also be provided separately or in any sub-combination. In addition, references to the singular may also include the plural (for example, "a" and "an" may refer to one or more) unless the context specifically states otherwise.

The use of numerical values in the various ranges specified in this application, unless expressly indicated otherwise, are stated as approximations as though the minimum and maximum values within the stated ranges were both proceeded by the word "about". In this manner, slight variations above and below the stated ranges can be used to achieve substantially the same results as values within the ranges. Also, the disclosure of these ranges is intended as a continuous range including each and every value between the minimum and maximum values.

As used herein:
The phrase "poly(trimethylene furandicarboxylate)" or PTF means a polymer comprising repeat units derived from 1,3-propanediol and furan dicarboxylic acid. In some embodiments, the poly(trimethylene furandicarboxylate) comprises greater than or equal to 95 mole% of repeat units derived from 1,3-propanediol and furan dicarboxylic acid. In still further embodiments, the mole% of the 1,3-propanediol and furan dicarboxylic acid repeat units is greater than or equal to 95 or 96 or 97 or 98 or 99 mole%, wherein the mole percentages are based on the total amount of monomers that form the poly(trimethylene furandicarboxylate). In some embodiments, the furan dicarboxylic acid is 2,3-furan dicarboxylic acid, 2,4-furan dicarboxylic acid, 2,5-furan dicarboxylic acid, or a combination thereof. In other embodiments, the furan dicarboxylic acid is 2,5-furan dicarboxylic acid.

The term "trimethylene furandicarboxylate repeat unit" means a polymer having as the repeating unit a structure consisting of alternating furandicarboxylate and $-CH_2CH_2CH_2O-$ groups, wherein "furandicarboxylate" encompasses furan-2,3-dicarboxylate, furan-2,4-dicarboxylate, and furan-2,5-dicarboxylate. The molecular weight of this repeat unit is 196 g/mole. The term "trimethylene furan-2,5-dicarboxylate repeat unit" means a polymer having as the repeating unit a structure consisting of alternating furan-2,5-dicarboxylate and $-CH_2CH_2CH_2O-$groups, according to Formula (I):

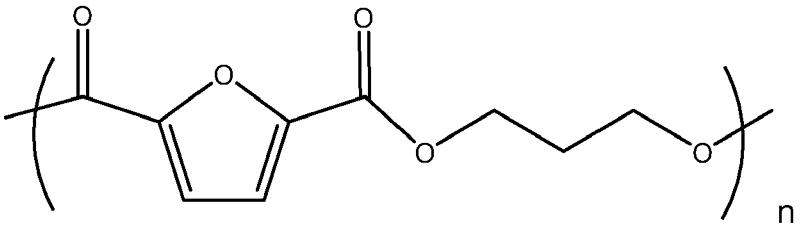

Formula (I).

Similarly, the term "trimethylene furan-2,4-dicarboxylate repeat unit" means a polymer having as the repeating unit a structure consisting of alternating furan-2,4-dicarboxylate and $-CH_2CH_2CH_2O-$ groups, and the term "trimethylene furan-2,3-dicarboxylate repeat unit" means a polymer having as the repeating unit a structure consisting of alternating furan-2,3-dicarboxylate and $-CH_2CH_2CH_2O-$ groups. The value of n (the number of repeat units) can be for example 10 to 1000, or 50-500 or 25-185, or 80-185.

Depending upon the number of repeat units in the polymer, the intrinsic viscosity can vary.

The phrases "polymer backbone" and "main chain of polymer" are used interchangeably herein and mean two or more monomer units linked covalently together create a continuous chain of polymer.

The phrase "end group" as used herein means a reactive or unreactive functional group present at an end of the polymer backbone.

The phrase "di-propanediol" or "di-PDO" repeat unit or end group of a polymer means a unit having a structure according to Formula (II):

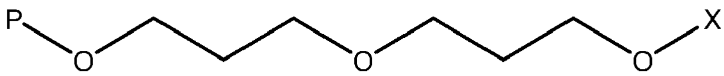

Formula (II)

wherein P is the poly(trimethylene furandicarboxylate) and X is P or hydrogen. The di-PDO group can be an end group wherein X is hydrogen, or the di-PDO group can be a repeat unit within the polymer backbone wherein X is P.

The phrase "allyl end group" means an allyl group at the end of a poly(trimethylene furandicarboxylate) polymer, for example according to Formula (III):

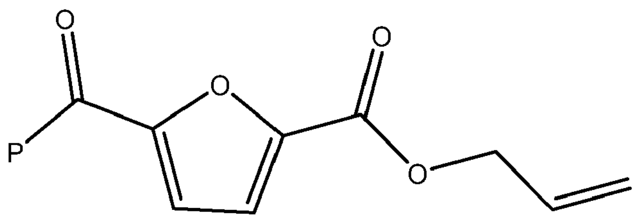

Formula (III)

wherein P represents the poly(trimethylene furandicarboxylate) polymer.

The phrase "alkyl ester end group" means an alkyl ester group at the end of a poly(trimethylene furandicarboxylate) polymer. In some embodiments, the alkyl end group can be methyl, ethyl, propyl, or butyl.

The phrase "carboxylic acid end groups" means a carboxylic acid group at the end of a poly(trimethylene furandicarboxylate) polymer.

The phrase "decarboxyl end groups" means the furan ring at the end of a poly(trimethylene furandicarboxylate) polymer has no carboxylic acid group.

The phrase "cyclic oligoester" means a cyclic compound composed of from two to eight repeating units of a structure according to Formula (I). The phrase "cyclic dimer oligoester" means a dimer having a structure according to Formula (IV):

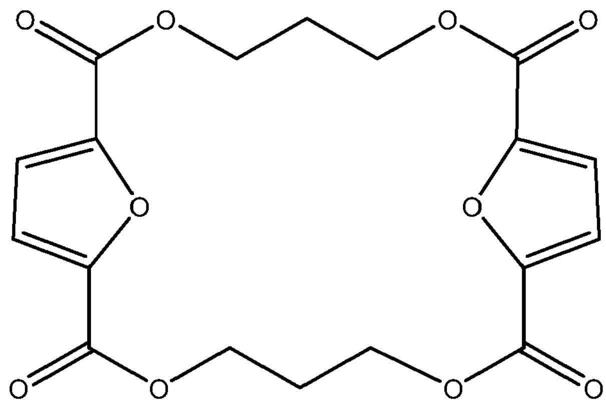

Formula (IV).

Other cyclic oligoesters include trimers, tetramers, pentamers, hexamers, heptamers, and octamers of the repeat unit of Formula (I).

The phrase "furan dicarboxylic acid" encompasses 2,3-furan dicarboxylic acid; 2,4-furan dicarboxylic acid; and 2,5-furan dicarboxylic acid. In one embodiment, the furan dicarboxylic acid is 2,3-furan dicarboxylic acid. In one embodiment, the furan dicarboxylic acid is 2,4-furan dicarboxylic acid. In one embodiment, the furan dicarboxylic acid is 2,5-furan dicarboxylic acid.

The phrase "furandicarboxylate dialkyl ester" means a dialkyl ester of furan dicarboxylic acid. In some embodiments, the furandicarboxylate dialkyl ester can have a structure according to Formula (V):

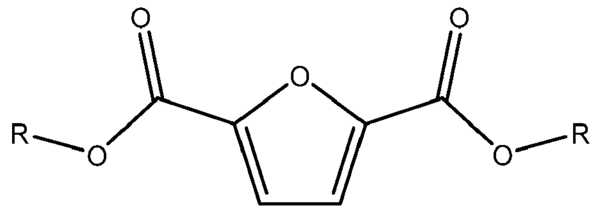

Formula (V)

wherein each R is independently $C_1$ to $C_8$ alkyl. In some embodiments, each R is independently methyl, ethyl, or propyl. In another embodiment, each R is methyl, and the furan dicarboxylate dialkyl ester is 2,5-furan dicarboxylic dimethyl ester (FDME). In yet another embodiment, each R is ethyl, and the furan dicarboxylate dialkyl ester is 2,5-furan dicarboxylic diethyl ester.

The terms "a* value", "b* value", and "L* value" mean a color according to CIE L*a*b* color space. The a* value represents the degree of red color (positive values) or the degree of green color (negative values). The b* value indicates the degree of yellow color (positive values) or the degree of blue color (negative values). The L* value represents the lightness of the color space wherein 0 indicates a black color and 100 refers to a diffuse white color. The degree of yellowness of the polymer is also represented by Yellowness Index (YI) - the higher the YI value, the more yellow color.

The term "prepolymer" means relatively low molecular weight compounds or oligomers having at least one trimethylene furandicarboxylate repeat unit, bis(1,3-propanediol)furandicarboxylate. Typically, prepolymer has a molecular weight in the range of from about 196 to about 6000 g/mole. The smallest prepolymer will generally be bis(1,3-propanediol) furandicarboxylate while the largest may have in the range of from 2 to 30 trimethylene furandicarboxylate repeat units.

As used herein, "weight average molecular weight" or "$M_w$" is calculated as

$M_w = \sum N_i M_i^2 / \sum N_i M_i$; where $M_i$ is the molecular weight of a chain and $N_i$ is the number of chains of that molecular weight. The weight average molecular weight can be determined by techniques such as gas chromatography (GC), high pressure liquid chromatography (HPLC), and gel permeation chromatography (GPC).

As used herein, "number average molecular weight" or "$M_n$" refers to the statistical average molecular weight

of all the polymer chains in a sample. The number average molecular weight is calculated as $M_n = \Sigma N_i M_i / \Sigma N_i$ where $M_i$ is the molecular weight of a chain and $N_i$ is the number of chains of that molecular weight. The number average molecular weight of a polymer can be determined by techniques such as gel permeation chromatography, viscometry via the (Mark-Houwink equation), and colligative methods such as vapor pressure osmometry, end-group determination, or proton NMR.

In some embodiments, the disclosure relates to a process comprising the steps:

a) contacting a mixture comprising furandicarboxylic acid dialkyl ester, 1,3-propanediol, a zinc compound, and optionally a poly(alkylene ether) diol, at a temperature in the range of from about 120°C to about 220°C to form prepolymer,
wherein the mole ratio of the furandicarboxylic acid dialkyl ester to the 1,3-propanediol is in the range of from 1:1.3 to 1:2.2; and
b) heating the prepolymer under reduced pressure to a temperature in the range of from about 220°C to about 260°C to form polymer.

In one embodiment of the process, the furandicarboxylic acid dialkyl ester is 2,5-furandicarboxylate dimethyl ester and the polymer is poly(trimethylene furandicarboxylate).

Like other polyesters, the properties of the poly(trimethylene-2,5-furandicarboxylate) polymer (PTF) depend on its structure, composition, molecular weight, and crystallinity characteristics, for example. In general, the higher the molecular weight the better the mechanical properties. In the processes disclosed herein for making high molecular weight poly(trimethylene furandicarboxylate), the PTF is prepared in a two stage melt polymerization which includes direct esterification or ester exchange (transesterification), and polycondensation at temperature(s) higher than the melt temperature of the final polymer. After the polycondensation step, the poly(trimethylene furandicarboxylate) polymer can be crystallized, then polymerized if desired in the solid state at a temperature below the melting point of the polymer.

As disclosed herein, PTF polymer having an intrinsic viscosity of at least 0.6 dL/g and/or a number average molecular weight of at least 15,000 g/mole is prepared in a melt polymerization process and without solid state polymerization.

The molecular weight of the PTF polymer can be measured by different techniques, for example proton NMR that provides the number average molecular weight from end group analysis, size exclusion chromatography that provides the number average and weight average molecular weights, and intrinsic viscosity. The intrinsic viscosity of the PTF polymer produced according to the disclosed process can be measured by standard methods, for example as disclosed in the Experimental Section herein below, and can be in the range of from 0.6 to 1.20 dL/g. In other embodiments, the intrinsic viscosity can be in the range of from 0.70 to 1.00 dL/g, or 0.70 to 0.90 dL/g, or 0.70 to 0.80 dL/g. The number average molecular weight ($M_n$) of the PTF polymer produced according to the process of the disclosure can be in the range of from 15,000 to 40,000 g/mole. In other embodiments, the number average molecular weight can be in the range of from 15,000 to 30,000 g/mole or 15,000 to 25,000 g/mole. The weight average molecular weight ($M_w$) of the PTF polymer can be in the range of from 30,000 to 80,000 g/mole, or 30,000 to 70,000 g/mole or 30,000 to 60,000 g/mole.

Differential Scanning Calorimetry (DSC) shows that the PTF polymer prepared using the disclosed melt polymerization process has no melting point when the polymer sample is heated at 10 °C/min, which indicates that the polymer is mostly in the amorphous state. In order to produce a crystallized PTF polymer, the amorphous PTF polymer is heated to the cold crystallization temperature, for example, heating to a temperature in the range of from 100 to 130°C, to obtain a crystallized PTF polymer from which the melting point can be determined. The melting temperature of crystallized PTF polymer depends on the molecular structure of repeat unit I, and the crystallization rate and morphology. As the molecular weight of the PTF polymer increases, the crystallization rate decreases and therefore the melt temperature decreases. The melt temperature ($T_m$) and enthalpy or heat of fusion ($\Delta H_m$) of the formed crystals are measured from heat-cool and heat cycles of DSC. The heat of fusion of the pure crystalline polymer is an important parameter which can be used along with the theoretical heat of melting for 100% crystalline PTF for the estimation of the degree of crystallinity of the polymer. The percent crystallinity is directly related to many of the key properties exhibited by a semi-crystalline polymer including: brittleness, toughness, stiffness or modulus, optical clarity, creep or cold flow, barrier resistance (ability to prevent gas transfer in or out) and long term stability.

The crystallized PTF polymer can have a broad melt temperature range with multiple peaks in DSC when the polymer is heated at 10°C/min whereas a single, narrow peak can be obtained when the polymer is heated at very slow rate, for example 1 °C/min. The melting temperature of the major peak of the crystallized PTF polymer is measured from the first heating DSC scan and is in the range from 155 to 185°C, preferably from 165 to 185°C. The glass transition temperature of the polymer is taken in the second heating DSC scan at 10°C/min rate and is within the range of 57 to 62°C.

Physical, mechanical, and optical properties of crystalline PTF are strongly dependent on the morphological features of the polymer, for example, the polymer size, shape, perfection, orientation, and/or volume fraction. Crystallization rates are typically expressed through the use of isothermal crystallization half-time ($t_{1/2}$) values in units of minutes

or seconds at a specific temperature and can be obtained from DSC experiments. The isothermal crystallization temperatures are between the glass transition temperature ($T_g$) and melting point ($T_m$) of the PTF polymer and can be measured at various temperatures ranging from 70-160 °C. The subsequent DSC heating traces after isothermal melt crystallization can provide information on the melting behavior of the polymer. The crystallization half-times and the crystallization rates depend on factors such as crystallization temperature, the average molecular weight, molecular weight distribution, the chain structure of the polymer, presence of any comonomer, nucleating agents, and plasticizers. Increasing the molecular weight in the melt polymerization process decreases the crystallization rate, and therefore the polymer as prepared from a melt is mostly amorphous. In general, polymers having a slow crystallization rate find limited use in engineering and packaging applications.

Polyesters prepared from melt polymerization processes are known to comprise cyclic oligomeric esters as an impurity. In case of poly(ethylene terephthalate), the majority of cyclic oligomeric ester is cyclic trimer typically present at levels of 2 to 4% by weight. In contrast, in the case of poly(trimethylene terephthalate) the major species of cyclic oligomeric ester is the cyclic dimer, which can be present in the polymer at 2.5% by weight or more. Cyclic oligomeric ester impurities can be problematic during polymerization, processing, and in end-use applications such as injection molded parts, apparel fibers, filaments, and films. Lowering cyclic oligomeric ester concentrations in the polymer could positively impact polymer production, for example by extended wipe cycle times during fiber spinning, reduced oligomer blooming of injection molded parts, and reduced blushing of films.

One way to reduce the content of the cyclic oligomeric esters in polyesters such as poly(ethylene terephthalate) and poly(trimethylene terephthalate) is by utilizing solid state polymerization. The major cyclic oligoester in PTF polymer is the cyclic dimer. The total amount of cyclic esters, including dimer, in the polymer can be determined from proton NMR analysis as described in the Experimental Section.

The poly(trimethylene furandicarboxylate) polymer can comprise end groups other than hydroxyl groups, for example, allyl, carboxylic acid, decarboxylic acid, alkylester, aldehyde, and di-PDO resulting from thermal or thermo-oxidative degradation of polymer chains, other side reactions during melt polymerization conditions, and impurities in the monomer(s). It is desirable to minimize formation of end groups other than hydroxyl groups.

In one embodiment, in step a) of the process a mixture consisting of, or consisting essentially of, furandicarboxylic acid dialkyl ester, 1,3-propanediol, optionally a poly(alkylene ether) diol, and a zinc compound is contacted at a temperature in the range of from 120°C to 220°C to form a prepolymer. By "consisting essentially of" is meant that less or equal to 1% by weight of other diester, diacid, or polyol monomers, that are not the furan dicarboxylate ester or 1,3-propanediol, are present in the mixture. In other embodiments, the mixture contacted in the first step is free from or essentially free from acid functional components, for example, acid functional monomers such as furandicarboxylic acid. As used herein, "essentially free from" means that the mixture comprises less than 5% by weight of acid functional monomers, based on the total weight of monomers in the mixture. In other embodiments, the amount of acid functional monomers is less than 4% or 3% or 2% or 1% or the amount of acid functional monomers is 0%. It has been found that the presence of acids during the polymerization process can lead to increased color in the final poly(trimethylene furandicarboxylate), therefore, the amount of acid should be kept as low as possible.

The furandicarboxylic acid dialkyl ester can be any of the diesters known, for example, furandicarboxylic acid dialkyl esters having from 1 to 8 carbon atoms in the ester group. The term "furandicarboxylic acid dialkyl ester" is used interchangeably herein with the term "furandicarboxylate dialkyl ester". In some embodiments, the furandicarboxylate dialkyl esters are furandicarboxylate dimethyl ester, furandicarboxylate diethyl ester, furandicarboxylate dipropyl ester, furandicarboxylate dibutyl ester, furandicarboxylate dipentyl ester, furandicarboxylate dihexyl ester, furandicarboxylate diheptyl ester, furandicarboxylate dioctyl ester or a combination thereof. In other embodiments, the furandicarboxylate dialkyl esters are furandicarboxylate dimethyl ester, furandicarboxylate diethyl ester, or a mixture of furandicarboxylate dimethyl ester and furandicarboxylate diethyl ester. The ester groups of the furandicarboxylate dialkyl esters can be positioned at the 2,3-, 2,4- or 2,5-positions of the furan ring. In some embodiments, the furandicarboxylate dialkyl ester is 2,3-furandicarboxylate dialkyl ester; 2,4-furandicarboxylate dialkyl ester; 2,5-furandicarboxylate dialkyl ester; or a mixture thereof. In still further embodiments, the furandicarboxylate dialkyl ester is 2,5-furandicarboxylate dialkyl ester, while in still further embodiments, it is 2,5-furandicarboxylate dimethyl ester.

In the contacting step, the mole ratio of the furandicarboxylic acid dialkyl ester to the 1,3-propanediol is in the range of from 1:1.3 to 1:2.2. In other words, for every 1 mole of furandicarboxylic acid dialkyl ester, at least 1.3 moles and up to 2.2 moles of 1,3-propanediol can be used. In principle, more than 2.2 moles of 1,3-propanediol can be used for every 1 mole of furandicarboxylic acid dialkyl ester, however, more than 2.2 moles of 1,3-propanediol provides little benefit and can increase the amount of time and energy required to remove at least a portion of the unreacted 1,3-propanediol. In other embodiments, the mole ratio of the furandicarboxylic acid dialkyl ester to the 1,3-propanediol can be in the range of from 1:1.3 up to 1:2.1, or from 1:1.3 to 1:2.0. In still further embodiments, the ratio of the furandicarboxylic acid dialkyl ester to the 1,3-propanediol can be in the range of from 1:1.4 up to 1:1.8 or from 1:1.5 up to 1:1.8.

A zinc compound is present in the contacting step and functions as a catalyst for the transesterification reactions, in which a prepolymer is made having a furandicarboxylate moiety within the polymer backbone. The concentration of

zinc, as zinc metal or a cation, in the mixture is in the range of from 20 parts per million (ppm) to 300 ppm by weight, based on the weight of the polymer. The weight of the polymer can be calculated based on moles of furandicarboxylic acid dialkyl ester added, multiplied by the mass of the repeat unit. In other embodiments, the amount of zinc present in the contacting step can be in the range of from 25 to 250 ppm, or from 30 to 200 ppm, or from 20 to 200 ppm, or from 40 to 150 ppm, or from 50 to 100 ppm. Suitable zinc compounds can include, for example, zinc acetate, zinc acetylacetonate, zinc glycolate, zinc p-toluenesulfonate, zinc carbonate, zinc trifluoroacetate, zinc oxide, and zinc nitrate. In one embodiment, the zinc compound comprises zinc acetate in anhydrous or hydrated form. In one embodiment, the zinc compound comprises zinc acetylacetonate. In one embodiment, the zinc compound comprises zinc glycolate. In one embodiment, the zinc compound comprises zinc p-toluenesulfonate. In one embodiment, the zinc compound comprises zinc carbonate. In one embodiment, the zinc compound comprises zinc trifluoroacetate. In one embodiment, the zinc compound comprises zinc oxide. In one embodiment, the zinc compound comprises zinc nitrate. The active catalyst as present during the reaction may be different from the compound added to the reaction mixture. Suitable zinc compounds can be obtained commercially or prepared by known methods.

During the contacting step, the furandicarboxylic acid dialkyl ester is transesterified with the 1,3-propanediol resulting in the formation of the bis(1,3-propanediol) furandicarboxylate prepolymer and an alkyl alcohol corresponding to the alcohol of the ester of the furandicarboxylic acid starting material. For example, when furandicarboxylic acid dimethyl ester is used, methanol is formed in addition to the prepolymer. During step a) the alkyl alcohol is removed by distillation. The contacting step can be performed at atmospheric pressure or, in other embodiments, at slightly elevated or reduced pressure. The pressure can be in the range from about 0.04 MPa to about 0.4 MPa. The contacting step is performed at a temperature in the range of from 120°C to 220°C, for example in the range of from 150°C to 220°C, or from 160°C to 220°C, or from 170°C to 215°C or from 180°C to 210°C or from 190°C to 210°C. The time is typically from one hour to several hours, for example 2, 3, 4, or 5 hours or any time in between 1 hour and 5 hours.

After the transesterification step, the prepolymer is heated under reduced pressure to a temperature in the range of from 220°C to 260°C to form the poly(trimethylene furandicarboxylate) polymer in a catalyzed polycondensation step. The same zinc compound used in the transesterification step can be used as catalyst in the polycondensation step. The total amount of the zinc compound can be added in its entirety before the transesterification step, or can be added in two portions, one portion being added before the transesterification step and the other before the polycondensation step. Byproduct 1,3-propanediol is removed during the polycondensation step. The temperature is typically in the range of from 220°C to 260°C, for example from 225°C to 255°C or from 230°C to 250°C. The pressure can be from less than about one atmosphere to 0.0001 atmospheres. In this step, the prepolymer undergoes polycondensation reactions, increasing the molecular weight of the polymer (as indicated by the increasing intrinsic viscosity or melt flow rate) and liberating 1,3-propanediol. The polycondensation step can be continued at a temperature in the range of from 220°C to 260°C for such a time as the intrinsic viscosity of the polymer reaches from about 0.6 to 1.2 dL/g. The time is typically from 1 hour to several hours, for example 2, 3, 4, 5, 6, 7, 8, 9 or 10 hours or any time in between 1 hour and 10 hours. In one embodiment, the polymer obtained from step b) has an intrinsic viscosity of at least 0.60 dL/g. Once the desired intrinsic viscosity of the polymer is reached, the reactor and its contents can be cooled, for example to room temperature, to obtain the poly(trimethylene furandicarboxylate) polymer.

The process steps a) and b) can be conducted in batch, semi-continuous, or continuous melt polymerization reactors. The process can be performed in a batch, semi-continuous, or continuous manner. Batch polymerization process (esterification, prepolymerization, or polycondensation) encompasses raw materials progressing through a unit operation/unit operations in a step wise fashion to produce an end product. Continuous polymerization process encompasses raw materials progressing through a unit operation/unit operations in a contiguous fashion to produce an end product. A process is considered continuous if material is continuously added to a unit during a reaction and the end product is continuously removed after polymerization. Semi-continuous polymerization process encompasses a process stage that is batch and a process stage that is continuous. For example, the esterification stage to prepare a prepolymer may be carried out batch wise and the subsequent polymerization stage(s) may be carried out continuously.

The zinc compounds disclosed herein can function as a catalyst in step a) (transesterification) and also in step b) (polycondensation) of the processes disclosed herein. In one embodiment, both step a) and step b) are performed using a zinc compound as catalyst. In one embodiment, both step a) and step b) are performed using the same zinc compound as catalyst. In one embodiment, both step a) and step b) are performed using only a zinc compound as catalyst. In one embodiment, both step a) and step b) are performed using a zinc compound as catalyst, and both step a) and step b) are performed without any additional metal catalyst. In one embodiment, step a) is performed in the absence of a titanium compound. In another embodiment, step b) is performed in the absence of a titanium compound. In yet another embodiment, both step a) and step b) are performed in the absence of a titanium compound.

In another embodiment, the mixture of step a) further comprises an anthraquinone compound represented by Structure A:

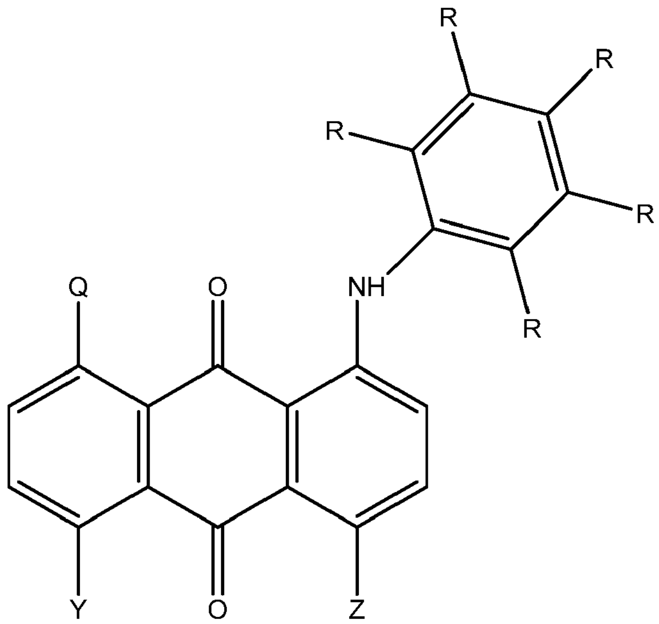

Structure A,

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', where R' is a cyclohexyl or substituted aryl group. In the mixture comprising furandicarboxylic acid dialkyl ester, 1,3-propanediol, a zinc compound, and optionally a poly(alkylene ether) diol, one or more anthraquinone compounds can be present in an amount in the range of from about 1 ppm to about 20 ppm, based on the total weight of the polymer. For example, the anthraquinone can be present in the mixture at 1 ppm, 2 ppm, 3 ppm, 4 ppm, 5 ppm, 6 ppm, 7 ppm, 8 ppm, 9 ppm, 10 ppm, 11 ppm, 12 ppm, 13 ppm, 14 ppm, 15 ppm, 16 ppm, 17 ppm, 18 ppm, 19 ppm, or 20 ppm (or any amount between two of these values).

Useful anthraquinone compounds can be obtained commercially. Preferably the anthraquinone compounds are free from halogens. Examples of anthraquinone compounds represented by Structure A include the following:

Solvent blue 104, also known as 1,4-bis(mesitylamino)anthraquinone or 1,4-bis[(2,4,6-trimethylphenyl)amino] anthracene, which has the following structure:

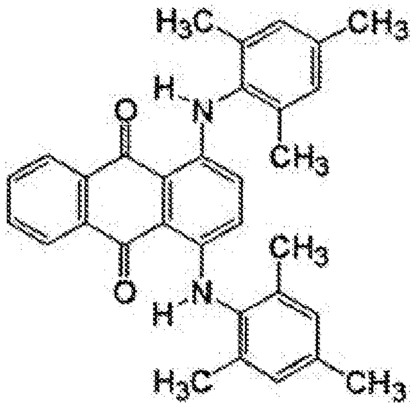

Solvent blue 45, also known as 4,4'-(1,4-anthraquinonylenediimino) bis[N-cyclohexyl-2-mesitylenesulfonamide], which has the following structure:

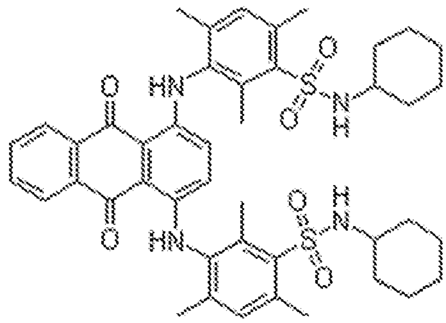

Solvent blue 97, also known as 1,4-bis[(2,6-diethyl-4-methylphenyl) amino]anthracene-9,10-dione, which has the following structure:

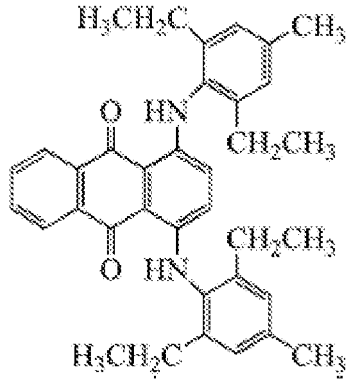

Solvent blue, also known as 1,4-bis[(4-n-butylphenyl)amino anthracene-9,10-dione, which has the following structure:

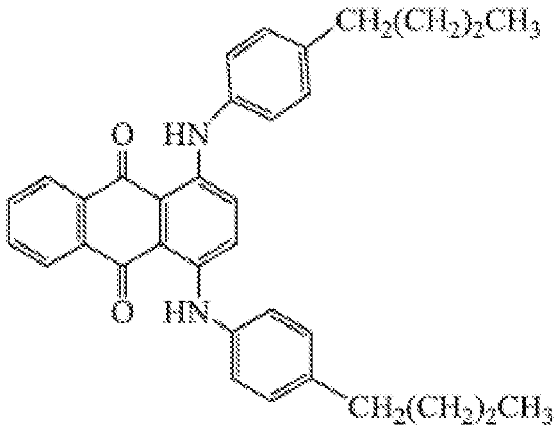

Solvent blue 122, also known as N-(4-((9,10-dihydro-4-hydroxy-9,10-dioxo-1-anthryl)amino)phenyl)acetamide, which has the following structure:

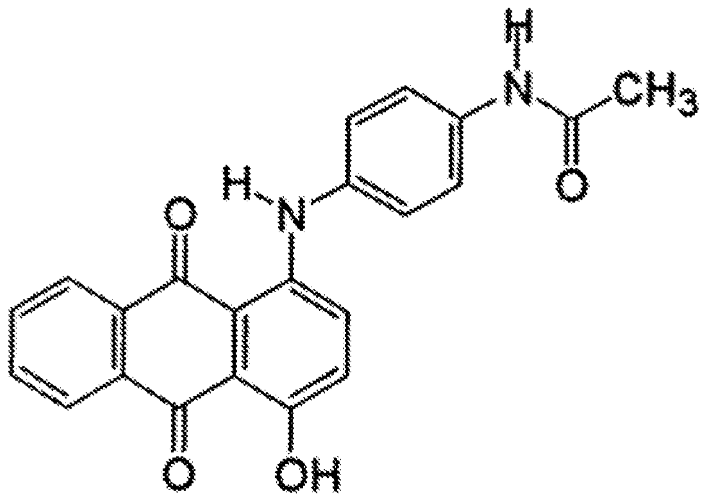

Solvent green 28, also known as 1,4-bis[(4-n-butylphenyl)amino-5,8-dihydroxy]anthracene-9,10-dione, which has the following structure:

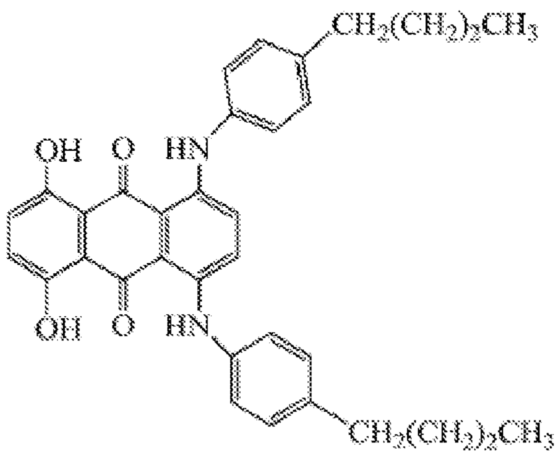

Solvent red 207, also known as 1,5-bis[(3-methylphenyl)amino] antharacene-9,10-dione, which has the following structure:

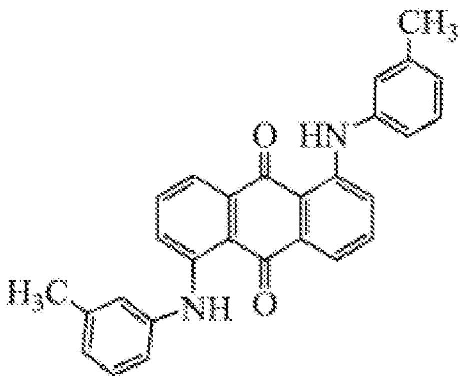

The anthraquinone compound can function as a color toner. The color of the polymer can be adjusted using one or two or more anthraquinone compounds. In some embodiments, the poly(trimethylene furandicarboxylate) polymer has a b* color value of less than 10, for example less than 3, as determined by spectrocolorimetry. In some embodiments, the L* color value of the poly(trimethylene furandicarboxylate) is greater than 65, for example greater than 75.

The anthraquinone compound can also function as a co-catalyst with the zinc compound to enhance the rate

of polycondensation. In one embodiment, a method of increasing polycondensation rate in a process to prepare poly(trimethylene furandicarboxylate) polymer is disclosed, the method comprising the steps:

a) contacting a mixture at a temperature in the range of from about 120°C to about 220°C to form prepolymer, wherein the mixture comprises furandicarboxylic acid dialkyl ester, 1,3-propanediol, a zinc compound, and an anthraquinone compound represented by Structure A

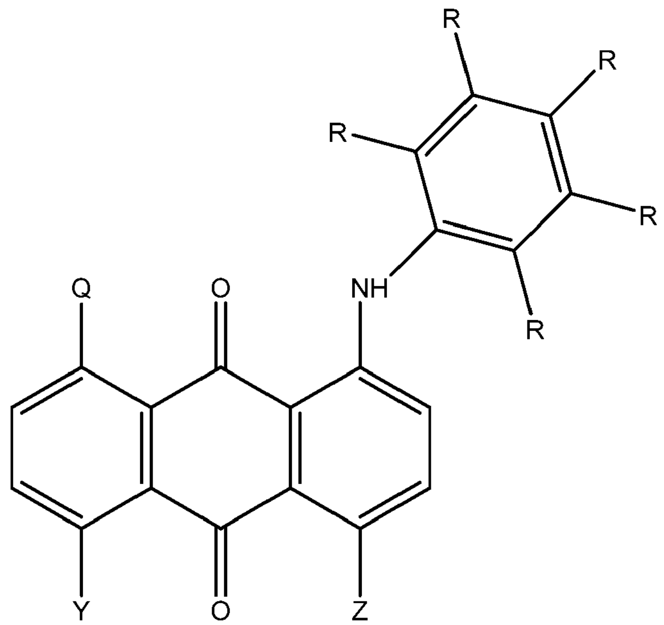

Structure A,

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', wherein R' is cyclohexyl or substituted aryl group;

wherein the mole ratio of the furandicarboxylic acid dialkyl ester to the 1,3-propanediol is in the range of from 1:1.3 to 1:2.2; and

b) heating the prepolymer under reduced pressure to a temperature in the range of from about 220°C to about 260°C to form poly(trimethylene furandicarboxylate) polymer.

The substituted aryl group is selected from the group consisting of H, OH, $C_1$-$C_6$ alkyl, $NHCOCH_3$, and $SO_2NHC_6H_{11}$.

Whether or not the mixture of step a) further comprises an anthraquinone compound, in some embodiments of the processes disclosed herein the mixture in step a) further comprises a phosphorus compound. The concentration of phosphorus can be in the range of from about 1 ppm to about 50 ppm, based on the total weight of the polymer. For example, the amount of phosphorus can be 1 ppm, 2 ppm, 3, ppm, 4 ppm, 5 ppm, 6 ppm, 7 ppm, 8 ppm, 9 ppm, 10 ppm, 11 ppm, 12 ppm, 13 ppm, 14 ppm, 15 ppm, 16 ppm, 17 ppm, 18 ppm, 19 ppm, 20 ppm, 21 ppm, 22 ppm, 23 ppm, 24 ppm, 25 ppm, 26 ppm, 27 ppm, 28 ppm, 29 ppm, 30 ppm, 31 ppm, 32 ppm, 33 ppm, 34 ppm, 35 ppm, 36 ppm, 37 ppm, 38 ppm, 39 ppm, 40 ppm, 41 ppm, 42 ppm, 43 ppm, 44 ppm, 45 ppm, 46 ppm, 47 ppm, 48 ppm, 49 ppm, or 50 ppm (or any amount between two of these values). In one embodiment, the amount of phosphorus can be from about 1 ppm to about 25 ppm. In another embodiment, the amount of phosphorus can be from about 1 ppm to about 10 ppm. In yet another embodiment, the amount of phosphorus can be from about 5 ppm to about 20 ppm. In one embodiment, the mixture of step a) further comprises an anthraquinone compound as disclosed herein and a phosphorus compound. In another embodiment, the mixture of step a) further comprises a phosphorus compound and no anthraquinone compound.

Suitable phosphorus compounds include phosphoric acid, phosphorous acid, polyphosphoric acid, phosphate esters such as triethyl phosphophate, tributyl phosphate, triphenyl phosphate, and mixtures thereof. In one embodiment, the phosphorus compound comprises phosphoric acid. The phosphorus compounds can be obtained commercially.

The zinc compound, the anthraquinone compound, and the phosphorus compound can be added in any form, for example as a powder or as a slurry or solution in a solvent such as 1,3-propanediol.

In a further embodiment, the process further comprises the step c) crystallizing the poly(trimethylene furandicarboxylate) polymer obtained from step b) at a temperature in the range of from about 110 °C to about 130 °C to obtain crystallized poly(trimethylene furandicarboxylate) polymer. Typical crystallization times can be in the range of from about one hour to several hours.

In yet another embodiment, the process further comprises the step d) polymerizing the crystallized poly(trimethylene furandicarboxylate) polymer in the solid state at a temperature below the melting point of the polymer. This step can be performed to obtain higher molecular weight polymer. Typically, in the solid state polymerization step pellets, granules, chips, or flakes of the crystallized poly(trimethylene furandicarboxylate) are subjected for a certain amount of time to elevated temperatures in between 160 °C and below the melt temperature of the polymer in a hopper, a tumbling drier, or a vertical tube reactor.

The mixture of step a) can optionally include a poly(alkylene ether) diol. The number average molecular weight of the poly(alkylene ether) diol can be in the range of from about 250 to about 3000 g/mole. In one embodiment, the poly(alkylene ether) diol (also known as a poly(alkylene ether) glycol or PAEG) is present in the mixture of step a), and the polymer obtained is a copolymer (also known as a copolyester). The copolymer comprises (trimethylene furandicarboxylate) and polyether polyol monomer units. An example of a suitable poly(alkylene ether) diol is poly(tetramethylene glycol) (PTMEG).

A copolyester can be made by a two-step process, wherein first a prepolymer is made from PDO, PAEG, and the furandicarboxylic acid dialkyl ester, resulting in an oligomer with a 2,5-furandicarboxylate moiety within the backbone. This intermediate product is preferably an ester composed of two diol monomers (PDO and PAEG) and one furandicarboxylic acid dialkyl ester monomer. Melt polymerization of the prepolymers under the polycondensation conditions disclosed herein provides the copolymer. In the case where PTMEG is used as the polyalkyene ether diol, the resulting copolymer comprises a furan-PTMEG soft segment and a PTF hard segment.

Alternatively, a polyester diol having a number average molecular weight in the range from about 250 to about 3000 g/mole may be used in place of PAEG, and the resulting copolymer comprises a furan-polyester diol soft segment and a PTF hard segment. The polyester diol is a reaction product of a dicarboxylic acid and a diol. The preferred polyester diol is made from using renewable sourced diacid and diol such as succinic acid, furandicarboxylic acid, or sebacic acid and the diol is ethylene glycol, 1,3-propanediol, 1,4-butanediol, or isosorbide,

The polymer and copolymers obtained by the processes disclosed herein can be formed into films or sheets directly from the polymerization melt. In the alternative, the compositions may be formed into an easily handled shape (such as pellets) from the melt, which may then be used to form a film or sheet. Sheets can be used, for example, for forming signs, glazings (such as in bus stop shelters, sky lights or recreational vehicles), displays, automobile lights, and in thermoforming articles.

Alternatively, the articles comprising the compositions described herein are molded articles, which may be prepared by any conventional molding process, such as, compression molding, injection molding, extrusion molding, blow molding, injection blow molding, injection stretch blow molding, extrusion blow molding and the like. Articles may also be formed by combinations of two or more of these processes, such as for example when a core formed by compression molding is overmolded by injection molding.

In particular, the polymer and copolymers are suitable for manufacturing:

- Fibers for apparel or flooring applications
- mono- and bi-oriented films, and films multilayered with other polymers;
- cling or shrink films for use with foodstuffs;
- thermoformed foodstuff packaging or containers, both mono- and multi-layered, as in containers for milk, yogurt, meats, beverages and the like;
- coatings obtained using the extrusion coating or powder coating method on substrates comprising of metals not limited to such as stainless steel, carbon steel, aluminum, such coatings may include binders, agents to control flow such as silica, alumina
- multilayer laminates with rigid or flexible backings such as for example paper, plastic, aluminum, or metallic films;
- foamed or foamable beads for the production of pieces obtained by sintering;
- foamed and semi-foamed products, including foamed blocks formed using pre-expanded articles; and
- foamed sheets, thermoformed foam sheets, and containers obtained from them for use in foodstuff packaging.

Non-limiting embodiments of the disclosure herein include:

1. A process comprising the steps:

a) contacting a mixture comprising furandicarboxylic acid dialkyl ester, 1,3-propanediol, a zinc compound, and optionally a poly(alkylene ether) diol, at a temperature in the range of from about 120°C to about 220°C to form prepolymer,

wherein the mole ratio of the furandicarboxylic acid dialkyl ester to the 1,3-propanediol is in the range of from 1:1.3 to 1:2.2; and

b) heating the prepolymer under reduced pressure to a temperature in the range of from about 220°C to about 260°C to form polymer.

2. The process of embodiment 1, wherein the furandicarboxylic acid dialkyl ester is 2,5-furandicarboxylate dimethyl ester and the polymer is poly(trimethylene furandicarboxylate).
3. The process of embodiments 1 or 2, wherein the zinc compound comprises zinc acetate, zinc acetylacetonate, zinc glycolate, zinc p-toluenesulfonate, zinc carbonate, zinc trifluoroacetate, zinc oxide, or zinc nitrate.
4. The process of embodiments 1, 2, or 3, wherein the concentration of the zinc compound is in the range of from about 20 ppm to about 300 ppm, based on the total weight of the polymer.
5. The process of embodiments 1, 2, 3, or 4 wherein step a) is performed in the absence of a titanium compound.
6. The process of embodiments 1, 2, 3, 4, or 5, wherein step b) is performed in the absence of a titanium compound.
7. The process of embodiments 1, 2, 3, 4, 5, or 6 wherein both step a) and step b) are performed in the absence of a titanium compound.
8. The process of embodiments 1, 2, 3, 4, 5, 6, or 7 wherein the mixture of step a) further comprises an anthraquinone compound represented by Structure A

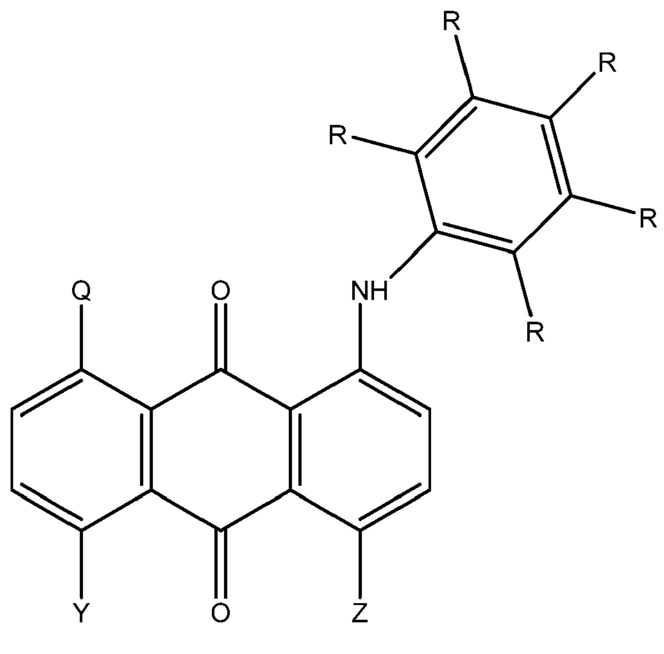

Structure A,

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', wherein R' is cyclohexyl or substituted aryl; and

wherein the anthraquinone compound is present in the mixture in an amount in the range of from about 1 ppm to about 20 ppm, based on the total weight of the polymer.

9. The process of embodiments 1, 2, 3, 4, 5, 6, 7, or 8 wherein the anthraquinone compound is 1,4-bis[(2,4,6-trimethylphenyl)amino]anthracene-9,10-dione.
10. The process of embodiments 1, 2, 3, 4, 5, 6, 7, 8, or 9 wherein the mixture in step a) further comprises a phosphorus compound, and wherein the phosphorus is present in the mixture in an amount in the range of from about 1 ppm to about 50 ppm, based on the total weight of the polymer.
11. The process of embodiments 1, 2, 3, 4, 5, 6, 7, 8, 9, or 10 wherein the polymer obtained from step b) has an

intrinsic viscosity of at least 0.60 dL/g.

12. The process of embodiments 1, 2, 3, 4, 5, 6, 7, 8, 9, 10, or 11 further comprising the step: c) crystallizing the poly(trimethylene furandicarboxylate) polymer obtained from step b) at a temperature in the range of from about 110 °C to about 130 °C to obtain crystallized poly(trimethylene furandicarboxylate) polymer.

13. The process of embodiments 1, 2, 3, 4, 5, 6, 7, 8, 9, 10, 11, or 12 further comprising the step: d) polymerizing the crystallized poly(trimethylene furandicarboxylate) polymer in the solid state at a temperature below the melting point of the polymer.

14. The process of embodiments 1, 2, 3, 4, 5, 6, 7, 8, 9, 10, 11, 12, or 13, wherein the process is batch, semi-continuous, or continuous.

15. The process of embodiments 1, 2, 3, 4, 5, 6, 7, 8, 9, 10, 11, 12, 13, or 14, wherein the poly(alkylene ether)glycol is present in the mixture of step a) and the poly(alkylene ether glycol) is selected from the group consisting of poly(ethylene ether) glycol, poly(1,2-propylene ether) glycol, poly(trimethylene ether) glycol, poly(tetramethylene ether) glycol and poly(ethylene-co-tetramethylene ether) glycol, and the polymer is a block copolymer comprising poly(trimethylene furandicarboxylate) hard segment and poly(alkylene ether furandicarboxylate) soft segment.

16. Poly(trimethylene furandicarboxylate) polymer obtained by the process of embodiments 1, 2, 3, 4, 5, 6, 7, 8, 9, 10, 11, 12, 13, or 14.

17. Copolymer comprising poly(trimethylene furandicarboxylate) hard segment and poly(alkylene ether furandicarboxylate) soft segment units, obtained by the process of embodiments 1, 2, 3, 4, 5, 6, 7, 8, 9, 10, 11, 12, 13, 14, or 15.

18. A method of increasing polycondensation rate in a process to prepare poly(trimethylene furandicarboxylate) polymer, the method comprising the steps:

a) contacting a mixture at a temperature in the range of from about 120°C to about 220°C to form prepolymer, wherein the mixture comprises furandicarboxylic acid dialkyl ester, 1,3-propanediol, a zinc compound, and an anthraquinone compound represented by Structure A

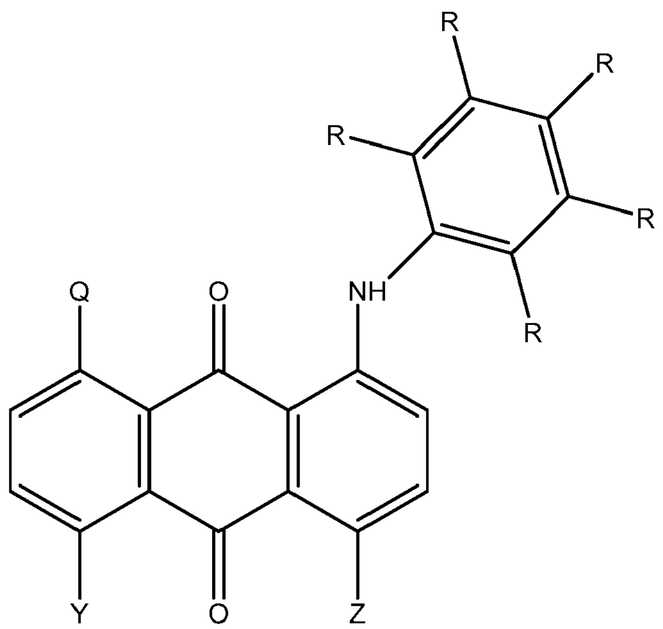

Structure A,

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', wherein R' is cyclohexyl or substituted aryl;

wherein the mole ratio of the furandicarboxylic acid dialkyl ester to the 1,3-propanediol is in the range of from 1:1.3 to 1:2.2; and

b) heating the prepolymer under reduced pressure to a temperature in the range of from about 220°C to about 260°C to form poly(trimethylene furandicarboxylate) polymer.

## EXAMPLES

Unless otherwise specifically stated, all ingredients are available from the Sigma-Aldrich Chemical Company, St. Louis, Missouri. Unless otherwise noted, all materials were used as received.
2,5-Furan dicarboxylic dimethyl ester (FDME) was obtained from Sarchem Laboratories Inc, Farmingdale, NJ.
1,3-propanediol (BioPDO™) was obtained from DuPont Tate & Lyle LLC. The abbreviation "PDO" is used throughout the examples for this ingredient.
Zinc diacetate (anhydrous), zinc diacetate dihydrate, phosphoric acid (85% solution), cobalt acetate, 1,4-butanediol, and tetra n-butyl titanate (TBT) were obtained from Sigma-Aldrich.
1,4-bis[(2,4,6-trimethylphenyl)amino]anthracene-9,10-dione (commercially available as Optica™ global PRT blue-2 toner in dispersion) and 3H-naphtho[1,2,3-de]quinoline-2,7-dione, 3-methyl-6-[(4-methylphenyl)amino] (commercially available as Optica™ global PRT red-2 toner dispersion)) compounds were obtained from ColorMatrix, Berea, OH.
As used herein, "Comp. Ex." Means Comparative Example; "Ex." means Example, "ppm" means parts per million, "g" means gram(s); "kg" means kilogram(s); "mL" means milliliter(s); "min" means minute(s); "h" means hour(s); "mol" means mole(s); "rpm" means revolutions per minute.

## TEST METHODS

### Color Measurement

A Hunterlab COLORQUEST™ Spectrocolorimeter (Reston, Virginia) was used to measure the color. Color is measured in terms of the tristimulus color scale, the CIE L* a* b*: the color value (L*) corresponds to the lightness or darkness of a sample, the color value (a*) on a red-green scale, and the color value (b*) on a yellow-blue scale. The reported color values are in general for the polymers that were crystallized at 110°C for overnight in an oven under vacuum. The calculated yellowness index (YI) values from this instrument are also reported.

### Isothermal crystallization

About 2 to 3 mg PTF specimens were heated from room temperature to 230°C at a heating rate of 30°C/min, held for 3 minutes, and were then cooled at 30°C/min to 0°C to obtain amorphous PTF (quenching in DSC instrument). Quenched specimens were then fast heated to a crystallization temperature of 110°C to 120°C and held there for 2-4 hours. A single heat experiment was then applied to the crystallized specimen to examine the crystallinity.

### Molecular Weight by Size Exclusion Chromatography

A size exclusion chromatography (SEC) system, Alliance 2695™ (Waters Corporation, Milford, MA), was provided with a Waters 2414™ differential refractive index detector, a multi-angle light scattering photometer DAWN Heleos (Wyatt Technologies, Santa Barbara, CA), and a VISCOSTAR II™ differential capillary viscometer detector (Wyatt). The software for data acquisition and reduction was ASTRA® version 6.1 by Wyatt. The columns used were two Shodex GPC HFIP-806M™ styrene-divinyl benzene columns with an exclusion limit of $2 \times 10^7$ and 8,000/30 cm theoretical plates; and one Shodex GPC HFIP-804M ™ styrene-divinyl benzene column with an exclusion limit $2 \times 10^5$ and 10,000/30cm theoretical plates.
The specimen was dissolved in 1,1,1,3,3,3-hexafluoro-2-propanol (HFIP) containing 0.01 M sodium trifluoroacetate by mixing at room temperature with moderate agitation for four hours followed by filtration through a 0.45 μm PTFE filter. Concentration of the solution was circa 2 mg/mL.
Data was taken with the chromatograph set at 35°C, with a flow rate of 0.5 mL/min. The injection volume was 100 μL. The run time was 80 min. Data reduction was performed incorporating data from all three detectors described above. Eight scattering angles were employed with the light scattering detector. No standards for column calibration were involved in the data processing. The weight average molecular weight ($M_w$) of the polymers are reported.

### Molecular Weight by Intrinsic Viscosity

Intrinsic viscosity (IV) was determined using the Goodyear R-103B Equivalent IV method, using PET T-3, DUPONT™ SELAR® PT-X250, DUPONT™ SORONA® 2864 as calibration standards on a VISCOTEK® Forced Flow Viscometer Model Y-501C. A 60/40 mixture of phenol/1,1,2,2-tetrachloroethane was used as solvent for the polymer. Samples were prepared by adding 0.15 g of resin in 30 mL of solvent mixture and stirred the mixture was heated at 100 °C for 30 minutes, cooled to room temperature for another 30 min and the intrinsic viscosity of the solution was measured.

**Melt flow index (MFI) or Melt flow rate (MFR)**

Melt flow index (MFI) is a measure of how many grams of a polymer flow through a die in ten minutes. The melt flow rates for the dried PTF polymer resins were measured using a melt flow apparatus (Extrusion Plastometer, Tinium Olsen, Willow Grove, PA) at 210 °C with a load of 2160 g according to the ASTM D1238. A correlation between MFR and IV was established for PTF polymer resins of varied molecular weights.

**Number average molecular weight (Mn) and end group quantification by $^1$H (proton) NMR**

$^1$H NMR spectra were collected using a 700 MHz NMR on about 55 mg samples in 0.7 mL 1,1,2,2-tetrachlorethane-d2 (tce-d2) at 110°C using an acquisition time of 4.68 sec, a 90 degree pulse, and a recycle delay of 30 sec, and with 16 transients averaged.

$^1$H NMR Calculation Methods

Samples were integrated and mole percentage calculated as is standard in the art. The peak assignments for the PTF polymer are shown below in TABLE 1.

**TABLE 1**

| δ (ppm) | Protons/Location | Description |
|---|---|---|
| 9.75 | 1H end group | Aldehyde |
| 7.58/6.51 | 1H end group | Decarboxylated furan |
| 7.28 | 2H backbone | Furandicarboxylate |
| 6.89 | 4H | Furandicarboxylate-PDO cylic dimer |
| 4.82 & 5.35-5.45 | 2H, 2H end group | Allyl end |
| 4.2 to 4.75 | 2H backbone | Propanediol esterified |
| 3.96 | 3H end group | Methyl ester |
| 3.81 | 4H | Unreacted propanediol |
| 3.75 | 2H end group | Propanediol hydroxyl end |
| 3.62 | 4H backbone | Di-PDO |
| 3.48 | 4H end | Di-PDO |
| 7.55 | 1H | Furancarboxylic acid end (derivatized with trifluoroacetic anhydride) |

**Method for Determining Total Amount of Cyclic Dimeric Esters in Poly(trimethylene-2,5-furandicarboxylate) by $^1$H NMR**

As shown in Table 1, furan ring hydrogens of cyclic dimer (δ 6.89) and furan ring hydrogens of PTF polymer (δ 7.2) have different chemical shifts. The weight percent of cyclic dimer was calculated using the following equations:

$$Molecular\ wt\ of\ cyclic\ dimer = \frac{\boldsymbol{nI}\ of\ furan\ ring\ hydrogens\ of\ cyclic\ dimer\ * 392}{sum\ of\ \boldsymbol{nI}\ of\ polymer\ ends}$$

$$Cyclic\ dimer\ wt\ \% = \frac{Molecular\ wt\ of\ cyclic\ dimer\ * 100}{sum\ of\ molecular\ weights\ of\ polymer\ and\ cyclic\ dimer}$$

***nI*** *= Normalized integral value*

**Example 1**

**Polytrimethylene 2,5-furandicarboxylate (PTF) Prepolymer Prepared Using Zinc Catalyst**

The following amounts of the ingredients were charged into a 3L three-neck glass reactor fitted with a nitrogen inlet, a condenser, and a mechanical stirrer: 2,5-furandicarboxylate dimethyl ester (FDME) (1.41 kg, 7.64 mol) and 1,3-propanediol (0.873 kg, 11.47 mol). The mole ratio of PDO to FDME was 1.5. The flask was placed in a metal bath which was preheated to a set temperature 160 °C. The reaction mixture was stirred using Ekato Paravisc impeller at 100 rpm for 10 minutes to obtain a homogeneous solution under nitrogen atmosphere. Anhydrous zinc diacetate (0.779 g; 185 ppm of zinc based on weight of the polymer) was added to the mixture at this set temperature. The metal bath temperature was set to 170 °C to initiate transesterification reaction and the first drop of the condensed distillate collected was noted as the start of the reaction (time zero). The reaction was continued at this temperature for 30 min, the temperature was raised to 190 °C and the reaction was continued for another 30 min. By this time most of the distillate (~545 mL) was collected and the distillate rate was slowed down at this point indicating the reaction is almost complete. The transesterification time was noted from the time at which the first methanol distillate drop was observed to the point at which the theoretical amount of methanol distillate was collected. A vacuum ramp was started while stopping the nitrogen purge. Pressure was gradually decreased from atmospheric to a final low pressure of ~0.2 mm Hg to 0.4 mm Hg absolute over a period of 1 to 1.5 h and during this time most of the excess 1,3-propanediol was collected in a trap. At this stage, the pressure in the flask was brought back to atmospheric pressure under nitrogen flow and removing the flash from the metal bath. The flask was cooled to room temperature and the prepolymer from the flask was recovered.

The recovered prepolymer was analyzed.by proton NMR and the properties of the prepolymer are listed in Table 2.

**Comparative Example A**

**Polytrimethylene 2,5-furandicarboxylate (PTF) Prepolymer Prepared Using Titanium Catalyst**

PTF prepolymer was prepared as described in Example 1 but using TBT as a catalyst and the process conditions as reported in Table 2.

**Table 2**

| | Ex 1 | Comp Ex A |
|---|---|---|
| Catalyst | 185 ppm Zn | 100 ppm Ti |
| Transesterification<br>Set Temp, °C<br>Time, min | <br>170-190<br>60 | <br>190-210<br>150 |
| Precondensation<br>Set Temp, °C<br>Vac. ramp time, min<br>Pressure at end, mm Hg | <br>200<br>90<br>0.2-0.4 | <br>210<br>90<br>0.2-04 |
| Mn (NMR) | 1900 | 3300 |
| End groups, meq/kg<br>Hydroxyls<br>Methyl<br>Allyl<br>Decarboxyl | <br>1054<br>16<br>none<br>none | <br>598<br>30<br>none<br>none |
| Di-PDO, wt% | 0.1 | 0.3 |
| Cyclic dimer, wt% | 0.4 | 0.4 |
| Color<br>L* | <br>95.6 | <br>87.9 |

(continued)

| | Ex 1 | Comp Ex A |
|---|---|---|
| a* | - 0.5 | -0.7 |
| b* | 3.0 | 5.7 |

The properties of the PTF prepolymer of Example 1 indicate that the zinc catalyst is a very effective transesterification catalyst relative to the titanium catalyst used to prepare the PTF prepolymer of Comparative Example A. The reaction was faster at milder temperature. The amount of methyl ester end groups in the prepolymer of Example 1 was lower than in Comparative Example A and could likely be reduced further by optimizing the mole ratio, catalyst amount, and the transesterification temperature and time. The prepolymer color, as indicated by CIE L* and b* was significantly better than that of the prepolymer made using the titanium catalyst.

**Example 2**

**Polytrimethylene 2,5-furandicarboxylate (PTF) polymer**

The following amounts of the ingredients were charged into a 3L three-neck glass reactor: 2,5-furandicarboxylate dimethyl ester (FDME) (1.41 kg, 7.64 mol) and 1,3-propanediol (0.873 kg, 11.47 mol). The mole ratio of PDO to FDME was 1.5. The flask was placed in a metal bath which was preheated to a set temperature 160 °C. The reaction mixture was stirred using Ekato Paravisc impeller at 100 rpm for 10 minutes to obtain homogeneous solution under nitrogen atmosphere. Zinc diacetate dihydrate (0.61 g; 130 ppm of zinc based on weight of the polymer) was added to the mixture at this set temperature. The metal bath temperature was set to 170 °C to initiate transesterification reaction and the first drop of the condensed distillate collected was noted as the start of the reaction (time zero). The reaction was continued at this temperature for 30 minutes and then the temperature was raised to 190 °C gradually and the reaction was continued another 35 minutes. By this time most of the distillate (~545 mL) was collected and the distillate rate was slowed down at this point indicating the reaction is almost complete.

A vacuum ramp was started while stopping the nitrogen purge. Pressure was gradually decreased from atmospheric to a final low pressure of 0.2 mm Hg to 0.4 mm Hg absolute over a period of 1 to 1.5 h and during this time most of the excess 1,3-propanediol was collected in a trap. The temperature of the metal bath was raised to 240 °C and the polycondensation reaction was continued under these conditions for 2-4 hours. During this time, the raise in motor torque was monitored as the molecular weight of the polymer built up, and the mixing speed was reduced gradually. Whenever the torque value in milli volts (mV) reached 60mV, the stirring speed was reduced from 100 to 80, then to 60, then to 40, then to 20 rpm. When there was no rapid increase in torque value observed at 20 rpm, the reaction was terminated by increasing the pressure to atmospheric pressure under nitrogen flow and removing the flash from the metal bath. The flask was cooled to room temperature and the solid polymer from the flask was recovered.

The recovered polymer was dried and crystallized at 110-120 °C overnight in vacuum oven. The properties of the final polymer are reported in Table 3.

**Example 3**

The polymer was prepared as described in Example 2 using zinc acetate (anhydrous) and cobalt acetate catalysts. The process conditions and properties of the polymer are reported in Table 3.

**Example 4**

The polymer was prepared as described in Example 2 except the polycondensation reaction was conducted in the presence of anhydrous zinc acetate and color toners 1,4-bis[(2,4,6-trimethylphenyl)amino]anthracene-9,10-dione ("PRT blue-2") and 3H-naphtho[1,2,3-de]quinoline-2,7-dione, 3-methyl-6-[(4-methylphenyl)amino] ("PRT red-2") which were added after the transesterification step. The process conditions and properties of the polymer are reported in Table 3.

**Example 5**

The polymer was prepared as described in Example 2 except the polycondensation reaction was conducted in the presence of anhydrous zinc acetate and phosphoric acid. The phosphoric acid was added after the transesterification step. The process conditions and properties of the polymer are reported in Table 3.

**Example 6**

The polymer was prepared as described in Example 2 except the polycondensation reaction was conducted in the presence of zinc acetate dihydrate, the blue and red anthraquinone compounds, and phosphoric acid. The anthraquinone and phosphorus compounds were added after the transesterification step. The process conditions and properties of the polymer are reported in Table 3.

**Comparative Example B**

The PTF polymer was prepared as described in Example 2 using tetrabutyl titanate catalyst, and the process conditions and properties of the polymer are reported in Table 3.

**TABLE 3**

| | Comp Ex B | Ex 2 | Ex 3 | Ex 4 | Ex 5 | Ex 6 |
|---|---|---|---|---|---|---|
| Metal catalyst, ppm | 100 Ti | 130 Zn | 140/30 Zn/Co | 150 Zn | 150 Zn | 150 Zn |
| Transesterification Set Temp, °C | 190-210 | 170-190 | 170-200 65 | 170-190 60 | 170-190 73 | 170-190 |
| Time, min | 140 | 65 | | | | 64 |
| Additives ppm | none | none | none | 5 PRT blue 5 PRT red | 16 P | 6 P 2PRT blue 2PRT red |
| Polycondensation<br>Set Temp, °C<br>Pressure, mm Hg<br>Time, min | <br>240 °C<br>-0.2<br>225 | <br>240 °C<br>-0.2<br>210 | <br>240 °C<br>-0.2<br>195 | <br>240 °C<br>-0.2<br>155 | <br>240 °C<br>-0.2<br>240 | <br>240 °C<br>-0.2<br>205 |
| Mn (NMR) | 15080 | 16610 | 17670 | 14600 | 15120 | 16650 |
| End groups, meq/kg<br>Hydroxyls<br>Carboxylics<br>Methyl<br>Allyl<br>Decarboxyl | <br>123<br>6<br>9<br>9<br>3 | <br>102.8<br>10<br>7<br>11<br>4 | <br>95.8<br>12<br>5<br>9<br>5 | <br>127<br>9<br>5<br>8<br>4 | <br>97.2<br>14<br>13<br>15<br>5 | <br>89.6<br>13<br>11<br>12<br>5 |
| Di-PDO, wt% | 0.4 | 0.7 | 0.8 | 0.6 | 0.8 | 0.7 |
| Cyclic dimer, wt% | 0.4 | 0.4 | 0.4 | 0.4 | 0.4 | 0.4 |
| Polymer color<br>L*<br>a*<br>b*<br>YI | <br>76.3<br>0.2<br>15.0<br>31 | <br>83.0<br>-2.0<br>10.0<br>19 | <br>81.1<br>-0.5<br>10.3<br>21 | <br>75.0<br>0.5<br>-2.4<br>-5 | <br>84.9<br>-2.1<br>8.4<br>15 | <br>78.5<br>-0.5<br>4.3<br>9 |

The data in Table 3 clearly indicates that zinc catalyst by itself is a very effective polymerization catalyst for PTF polymer (Example 2) without having any other polymerization catalyst. When compared to titanium catalyst (Comp Ex B) which is the most effective polymerization catalyst known for polyester, the zinc catalyst for the PTF polymer is found to be even more effective than titanium. In spite of lower transesterification temperature, and transesterification and polycondensation time, the molecular weight of the polymer is higher (16610 vs 15080) indicating superior activity of the zinc catalyst compared to titanium. In addition, the crystallized PTF polymer obtained from using a zinc catalyst has better in color than a titanium catalyst based polymer as the whiteness (L*) of the polymer is higher by more than 6 units and the yellowness (b*) is lower by 5 units.

The color results obtained for the polymer in Example 3 are surprising as the conventional cobalt toner is one of the most widely used toners to mask the yellow color of PET polymer; however in Example 3 the cobalt catalyst did not have any significant impact on the yellow color of the PTF polymer when compared to the polymer in Example 2. The use of a mixed catalyst system has resulted a polymer having slightly higher molecular weight.

Examples 4-6 demonstrate the effectiveness of the zinc catalyst in the presence of toners and phosphorous compounds: the color toners helped in reducing the polycondensation time and the phosphorus improved the polymer color further.

**Comparative Example C**

In an attempt to make polybutylene furandicarboxylate using zinc acetate, the transesterification reaction was carried out as described in Example 1 with the following amounts of the ingredients: FDME (1300 g; 7.05 moles), BDO (952.8 g; 10.59 moles), and anhydrous zinc acetate (120 ppm) for 90 min at 170-210 °C. A total of 915 mL distillate was collected, instead of 571 mL which is the theoretical amount of methanol distillate. The distillate was analyzed by proton NMR and found to contain 52.8 wt% methanol, 41.4 wt% tetrahydrofuran, 4.2 wt% 1,4-butanediol and 1.6 wt% FDME. This example illustrates the ineffectiveness of zinc acetate as catalyst in synthesis of poly(butylene 2,5-furandicarboxylate) polymer from FDME and BDO.

The following numbered paragraphs (paras.) contain further statements of various aspects of the present invention:-

1. A process comprising the steps:

   a) contacting a mixture comprising furandicarboxylic acid dialkyl ester, 1,3-propanediol, a zinc compound, and optionally a poly(alkylene ether) diol, at a temperature in the range of from about 120°C to about 220°C to form prepolymer,
   wherein the mole ratio of the furandicarboxylic acid dialkyl ester to the 1,3-propanediol is in the range of from 1:1.3 to 1:2.2; and
   b) heating the prepolymer under reduced pressure to a temperature in the range of from about 220°C to about 260°C to form a polymer.

2. The process of para 1, wherein the furandicarboxylic acid dialkyl ester is 2,5-furandicarboxylate dimethyl ester and the polymer is poly(trimethylene furandicarboxylate).

3. The process of para 1, wherein the zinc compound comprises zinc acetate, zinc acetylacetonate, zinc glycolate, zinc p-toluenesulfonate, zinc carbonate, zinc trifluoroacetate, zinc oxide, or zinc nitrate.

4. The process of para 1, wherein the concentration of the zinc compound is in the range of from about 20 ppm to about 300 ppm, based on the total weight of the polymer.

5. The process of para 1, wherein step a) is performed in the absence of a titanium compound.

6. The process of para 1, wherein step b) is performed in the absence of a titanium compound.

7. The process of para 1, wherein both step a) and step b) are performed in the absence of a titanium compound.

8. The process of para 1, wherein the mixture of step a) further comprises an anthraquinone compound represented by Structure A

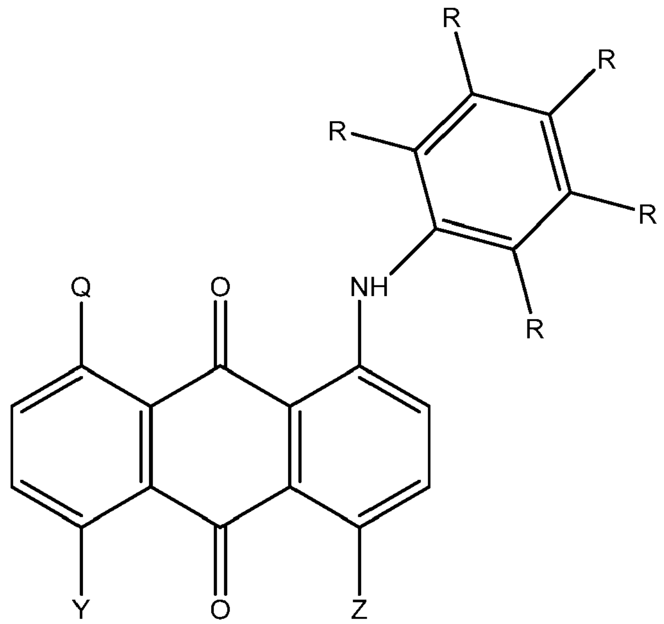

Structure A,

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', wherein R' is cyclohexyl or substituted aryl; and
wherein the anthraquinone compound is present in the mixture in an amount in the range of from about 1 ppm to about 20 ppm, based on the total weight of the polymer.

9. The process of para 8, wherein the anthraquinone compound is 1,4-bis[(2,4,6-trimethylphenyl)amino]anthracene-9,10-dione.

10. The process of para 8, wherein the mixture in step a) further comprises a phosphorus compound, and wherein the phosphorus is present in the mixture in an amount in the range of from about 1 ppm to about 50 ppm, based on the total weight of the polymer.

11. The process of para 1, wherein the mixture in step a) further comprises a phosphorus compound, and wherein the phosphorus is present in the mixture in an amount in the range of from about 1 ppm to about 50 ppm, based on the total weight of the polymer.

12. The process of para 1, wherein the polymer obtained from step b) has an intrinsic viscosity of at least 0.60 dL/g.

13. The process of para 1, further comprising the step:
c) crystallizing the poly(trimethylene furandicarboxylate) polymer obtained from step b) at a temperature in the range of from about 110 °C to about 130 °C to obtain crystallized poly(trimethylene furandicarboxylate) polymer.

14. The process of para 13, further comprising the step:
d) polymerizing the crystallized poly(trimethylene furandicarboxylate) polymer in the solid state at a temperature below the melting point of the polymer.

15. The process of para 1, wherein the process is batch, semi-continuous, or continuous.

16. Poly(trimethylene furandicarboxylate) polymer obtained by the process of 1.

17. The process of para 1, wherein the poly(alkylene ether)glycol is present in the mixture of step a) and the poly(alkylene ether glycol) is selected from the group consisting of poly(ethylene ether) glycol, poly(1,2-propylene

ether) glycol, poly(trimethylene ether) glycol, poly(tetramethylene ether) glycol and poly(ethylene-co-tetramethylene ether) glycol, and the polymer is a block copolymer comprising poly(trimethylene furandicarboxylate) hard segment and poly(alkylene ether furandicarboxylate) soft segment.

18. Copolymer comprising poly(trimethylene furandicarboxylate) hard segment and poly(alkylene ether furandicarboxylate) soft segment units, obtained by the process of para 17.

19. A method of increasing polycondensation rate in a process to prepare poly(trimethylene furandicarboxylate) polymer, the method comprising the steps:

a) contacting a mixture at a temperature in the range of from about 140°C to about 220°C to form prepolymer, wherein the mixture comprises furandicarboxylic acid dialkyl ester, 1,3-propanediol, a zinc compound, and an anthraquinone compound represented by Structure A

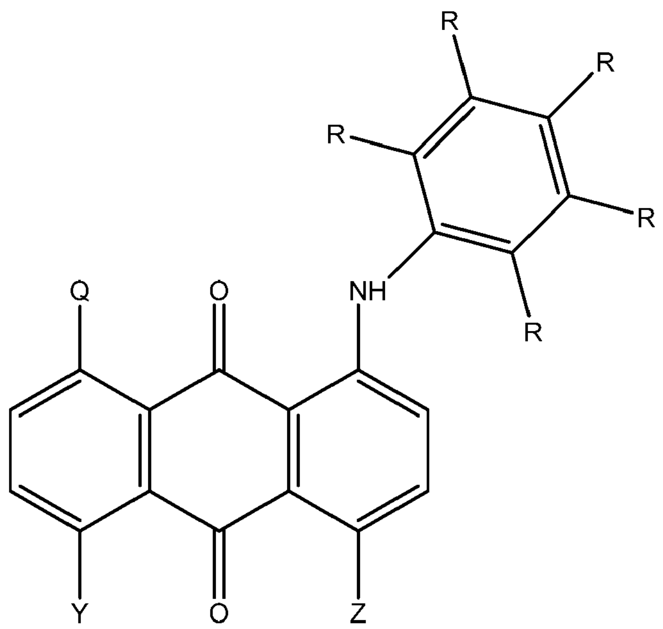

Structure A,

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', wherein R' is cyclohexyl or substituted aryl;
wherein the mole ratio of the furandicarboxylic acid dialkyl ester to the 1,3-propanediol is in the range of from 1:1.3 to 1:2.2; and
b) heating the prepolymer under reduced pressure to a temperature in the range of from about 220°C to about 260°C to form poly(trimethylene furandicarboxylate) polymer.

## Claims

**1.** A process comprising the steps:

a) contacting a mixture comprising furandicarboxylic acid dialkyl ester, 1,3-propanediol, a zinc compound, and optionally a poly(alkylene ether) diol, at a temperature in the range of from about 120°C to about 220°C to form prepolymer,
wherein the mole ratio of the furandicarboxylic acid dialkyl ester to the 1,3-propanediol is in the range of from 1:1.3 to 1:2.2; and
b) heating the prepolymer under reduced pressure to a temperature in the range of from about 220°C to about

260°C to form a polymer.

2. The process of claim 1, wherein the furandicarboxylic acid dialkyl ester is 2,5-furandicarboxylate dimethyl ester and the polymer is poly(trimethylene furandicarboxylate).

3. The process of claim 1 or 2, wherein the zinc compound comprises zinc acetate, zinc acetylacetonate, zinc glycolate, zinc p-toluenesulfonate, zinc carbonate, zinc trifluoroacetate, zinc oxide, or zinc nitrate.

4. The process of any of claims 1 to 3, wherein the concentration of the zinc compound is in the range of from about 20 ppm to about 300 ppm, based on the total weight of the polymer.

5. The process of any one of claims 1 to 4, wherein step a) is performed in the absence of a titanium compound, and/or step b) is performed in the absence of a titanium compound.

6. The process of any one of claims 1 to 5, wherein the mixture of step a) further comprises an anthraquinone compound represented by Structure A

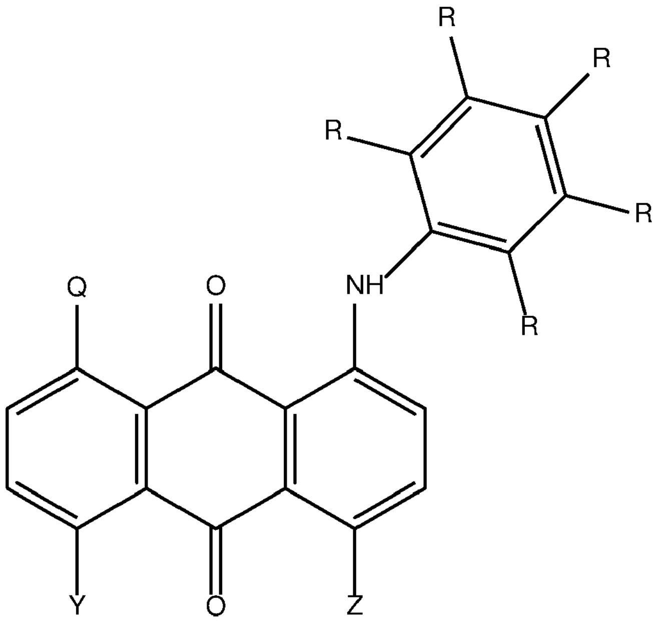

Structure A,

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', wherein R' is cyclohexyl or substituted aryl; and
wherein the anthraquinone compound is present in the mixture in an amount in the range of from about 1 ppm to about 20 ppm, based on the total weight of the polymer.

7. The process of claim 6, wherein the anthraquinone compound is 1,4-bis[(2,4,6-trimethylphenyl)amino]anthracene-9,10-dione.

8. The process of any one of claims 1 to 7, wherein the mixture in step a) further comprises a phosphorus compound, and wherein the phosphorus is present in the mixture in an amount in the range of from about 1 ppm to about 50 ppm, based on the total weight of the polymer.

9. The process of any one of claims 1 to 8, wherein the polymer obtained from step b) has an intrinsic viscosity of at least 0.60 dL/g as determined according to the method described in the description.

**10.** The process of any one of claims 1 to 9, further comprising the step:

c) crystallizing the poly(trimethylene furandicarboxylate) polymer obtained from step b) at a temperature in the range of from about 110 °C to about 130 °C to obtain crystallized poly(trimethylene furandicarboxylate) polymer; and optionally further comprises the step:
d) polymerizing the crystallized poly(trimethylene furandicarboxylate) polymer in the solid state at a temperature below the melting point of the polymer.

**11.** The process of any one of claims 1 to 10, wherein the process is batch, semi-continuous, or continuous.

**12.** Poly(trimethylene furandicarboxylate) polymer obtained by the process of any one of claims 1 to 11.

**13.** The process of any one of claims 1 to 11, wherein the poly(alkylene ether)glycol is present in the mixture of step a) and the poly(alkylene ether glycol) is selected from the group consisting of poly(ethylene ether) glycol, poly(1,2-propylene ether) glycol, poly(trimethylene ether) glycol, poly(tetramethylene ether) glycol and poly(ethylene-co-tetramethylene ether) glycol, and the polymer is a block copolymer comprising poly(trimethylene furandicarboxylate) hard segment and poly(alkylene ether furandicarboxylate) soft segment.

**14.** Copolymer comprising poly(trimethylene furandicarboxylate) hard segment and poly(alkylene ether furandicarboxylate) soft segment units, obtained by the process of claim 13.

**15.** A method of increasing polycondensation rate in a process to prepare poly(trimethylene furandicarboxylate) polymer, the method comprising the steps:

a) contacting a mixture at a temperature in the range of from about 140°C to about 220°C to form prepolymer, wherein the mixture comprises furandicarboxylic acid dialkyl ester, 1,3-propanediol, a zinc compound, and an anthraquinone compound represented by Structure A

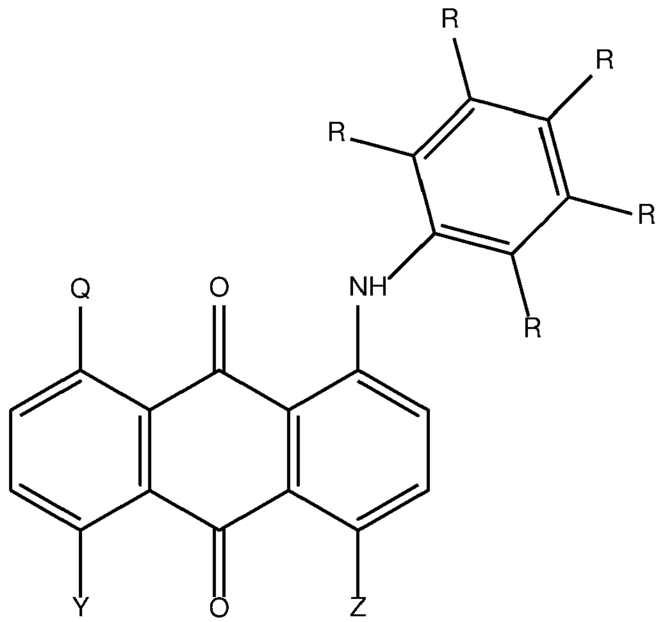

Structure A,

wherein each R is independently selected from the group consisting of H, OH, $C_1$-$C_6$ alkyl, $NHCOCH_3$, $SO_2NHC_6H_{11}$, and each Q, Y, and Z is independently selected from H, OH, $NH_2$, and NHR', wherein R' is cyclohexyl or substituted aryl;
wherein the mole ratio of the furandicarboxylic acid dialkyl ester to the 1,3-propanediol is in the range of from 1:1.3 to 1:2.2; and

b) heating the prepolymer under reduced pressure to a temperature in the range of from about 220°C to about 260°C to form poly(trimethylene furandicarboxylate) polymer.

Europäisches Patentamt
European Patent Office
Office européen des brevets

# EUROPEAN SEARCH REPORT

Application Number
EP 21 15 5743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RUTGER J KNOOP ET AL: "High Molecular Weight Poly(ethylene-2,5-furaonate); Critical Aspects in Synthesis and Mechanical Property Determination", JOURNAL OF POLYMER SCIENCE, PART A: POLYMER CHEMISTRY,, vol. 51, 3 July 2013 (2013-07-03), pages 4191-4199, XP002777356, DOI: 10.1002/POLA.26833 * page 4193 * ----- | 1-15 | INV. C08G63/181 C08G63/672 C08G63/83 C08G63/84 |
| A | WO 2013/149157 A1 (DU PONT [US]) 3 October 2013 (2013-10-03) * page 17 - page 19; example 1 * ----- | 1-15 | |
| A | WO 2013/062408 A1 (FURANIX TECHNOLOGIES BV [NL]) 2 May 2013 (2013-05-02) * page 4, line 33 - page 5, line 27 * * example 2 * ----- | 1-15 | |
| | | | TECHNICAL FIELDS SEARCHED (IPC) |
| | | | C08G |

The present search report has been drawn up for all claims

1

| Place of search | Date of completion of the search | Examiner |
|---|---|---|
| The Hague | 29 June 2021 | Mensah, Laure |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 15 5743

This annex lists the patent family members relating to the patent documents cited in the above-mentioned European search report. The members are as contained in the European Patent Office EDP file on The European Patent Office is in no way liable for these particulars which are merely given for the purpose of information.

29-06-2021

| Patent document cited in search report | Publication date | Patent family member(s) | Publication date |
|---|---|---|---|
| WO 2013149157 A1 | 03-10-2013 | AU 2013237796 A1 | 11-09-2014 |
| | | AU 2016266091 A1 | 22-12-2016 |
| | | AU 2018204524 A1 | 12-07-2018 |
| | | AU 2020200689 A1 | 20-02-2020 |
| | | CA 2869121 A1 | 03-10-2013 |
| | | CN 104220482 A | 17-12-2014 |
| | | CN 107652419 A | 02-02-2018 |
| | | EP 2831137 A1 | 04-02-2015 |
| | | EP 3369846 A1 | 05-09-2018 |
| | | HK 1200182 A1 | 31-07-2015 |
| | | IL 234158 A | 31-07-2017 |
| | | JP 6268161 B2 | 24-01-2018 |
| | | JP 2015514151 A | 18-05-2015 |
| | | KR 20150005564 A | 14-01-2015 |
| | | KR 20190137938 A | 11-12-2019 |
| | | NZ 628957 A | 31-03-2016 |
| | | RU 2014143803 A | 27-05-2016 |
| | | SG 11201405173P A | 26-09-2014 |
| | | US 2014205786 A1 | 24-07-2014 |
| | | US 2015001213 A1 | 01-01-2015 |
| | | US 2016237206 A1 | 18-08-2016 |
| | | US 2019248954 A1 | 15-08-2019 |
| | | WO 2013149157 A1 | 03-10-2013 |
| | | WO 2013149221 A1 | 03-10-2013 |
| WO 2013062408 A1 | 02-05-2013 | BR 112014009029 A2 | 13-06-2017 |
| | | CA 2853244 A1 | 02-05-2013 |
| | | CA 3061795 A1 | 02-05-2013 |
| | | CN 104024301 A | 03-09-2014 |
| | | EP 2771382 A1 | 03-09-2014 |
| | | EP 3327061 A1 | 30-05-2018 |
| | | ES 2664644 T3 | 20-04-2018 |
| | | JP 6621237 B2 | 18-12-2019 |
| | | JP 2014530948 A | 20-11-2014 |
| | | KR 20140110845 A | 17-09-2014 |
| | | KR 20180132940 A | 12-12-2018 |
| | | MX 351452 B | 16-10-2017 |
| | | SG 11201401745U A | 26-09-2014 |
| | | US 2014336349 A1 | 13-11-2014 |
| | | US 2017066875 A1 | 09-03-2017 |
| | | WO 2013062408 A1 | 02-05-2013 |
| | | ZA 201403397 B | 25-11-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62462948